# EUROPEAN PATENT SPECIFICATION

(11) **EP 2 158 354 B1**
(45) Date of publication and mention of the grant of the patent: **04.04.2012**
(21) Application number: 08760622.4
(22) Date of filing: 06.06.2008
(51) Int. Cl.: D06M 15/227, D06M 15/263, D06M 16/00, C09D 123/08, A01N 25/02, A01N 25/04, A01N 25/10, A01N 25/24, A01N 25/34

(54) **AQUEOUS FORMULATION AND PROCESS FOR THE IMPREGNATION OF NON-LIVING-MATERIALS IMPARTING A PROTECTIVE ACTIVITY AGAINST PESTS**
WÄSSRIGE FORMULIERUNG UND VERFAHREN ZUR IMPRÄGNIERUNG NICHT-LEBENDER MATERIALIEN MIT SCHÜTZENDER WIRKUNG VOR SCHÄDLINGEN
FORMULATION AQUEUSE ET PROCESSUS D'IMPRÉGNATION DE MATIÈRES NON VIVANTES EXERÇANT UNE ACTION PROTECTRICE CONTRE LES PARASITES

(30) Priority: 12.06.2007 EP 07110107
(43) Date of publication of application: 03.03.2010
(73) Proprietor: BASF SE, 67056 Ludwigshafen (DE)
(72) Inventor: KARL, Ulrich, 67269 Grünstadt (DE); PFISTNER, Heike, 67071 Ludwigshafen (DE)
(86) International application number: PCT/EP2008/057048
(87) International publication number: WO 2008/151984

(56) References cited:
- EP-A- 1 724 392
- WO-A-2005/064072
- WO-A-2005/113886
- WO-A-2007/090739

## Description

Herein described is an aqueous formulation for the impregnation of non-living-materials, preferably textile materials, comprising at least a pesticide and a polymeric binder comprising as monomers at least ethylene and an unsaturated carboxylic acid, a process for impregnating such materials and the use of such impregnated materials as mosquito-nets and for the protection of plants and other goods.

In tropical countries infectious diseases are frequently transmitted by biting or blood-feeding insects. Besides medical methods like vaccination efforts have been concentrated on methods of controlling such transmitting insects. Methods of controlling such insects comprise treating surfaces of huts and houses, air spraying and impregnation of curtains and bednets. The latter may done by dipping the textile material into emulsions or dispersions of insecticides or spraying insecticides onto the nets. Since such a treatment provides only a poor adhesion of the insecticide molecules on the surface of the textile materials the treatment is not wash-permanent and has to be repeated after every washing.

For that reason, efforts have been concentrated on the long-term fixation of such insecticides on textile materials using certain binders and/or other auxiliaries in order to obtain textile materials which need not to be treated again after every washing but retain its activity on long term.

WO 01/37662 discloses impregnated nettings or fabrics for insect or tick killing and/or repellent of an insect or tick comprising an insecticide and/or a repellent, and a film forming component reducing the wash off and degradation of the insecticide component from the netting or fabric by forming a water- and optionally an oil-resistant film. The film forming component comprises one or more components selected from paraffin oil or wax derivatives, silicon derivatives, silicon oils or wax derivatives, and polyfluorocarbon derivatives.

WO 03/034823 discloses an insecticide composition for application to a fabric material comprising an insecticide, a copolymeric binder, and a dispersing agent. The copolymeric binder is prepared as a copolymer emulsion that is derived by an emulsion polymerization technique from monomers selected from at least one of the groups including a) vinyl esters of aliphatic acid having 1 to 18 carbon atoms, such as vinyl acetate and vinyl versatate; b) acrylic and methacrylic esters of an alcohol having 1 to 18 carbon atoms, such as butyl acrylate, 2-ethylhexylacrylate, and methyl acrylate; and c) mono- and di-ethylenically unsaturated hydrocarbons, such as styrene, and aliphatic diens, such as butadiene.

US 5,631,072 discloses the manufacture of insecticide-impregnated fabrics using polymeric binders and a cross-linking agent, or by surface coating with a polymeric binder and a thickening agent. The binder may be an acrylic binder or polyvinylacetate.

WO 2005/64072 discloses the impregnation of textile materials using an acrylic binder comprising n-butylacrylate and at least one acrylic monomer comprising OH-groups suitable for crosslinking using suitable crosslinkers. Impregnation and crosslinking may be done at elevated temperatures using usual equipment for textile treatment.

WO 2006/128870 discloses a composition for the impregnation of non-living, in particular textile materials, which comprises an N-arylhydrazine derivative and at least one polymeric binder. The binder may be selected from polyacrylates or copolymers thereof at least such as ethylene-acrylate-copolymers ethylene-vinylacetate-copoly-mers, or styrene-acrylate-copolymers. The binders may preferably be crosslinked at elevated temperatures.

Although crosslinking the binders at elevated temperatures provides a good long-term performance it requires specific equipment for treating textile materials at elevated temperatures. However, in tropic countries there is often a need to impregnate textile materials locally and sophisticated equipment for treating textile materials at elevated temperatures is not available. In the case of the prevention of vector-borne diseases, e.g. malaria, by the use of impregnated bednets it is desirous to locally impart a long-lasting insecticidal effect onto already existing, yet untreated nets by an in-field-treatment without special technical equipment.

It was an object of the present invention to provide a method for impregnating textile materials with pesticides which may be performed at ambient temperatures and which nevertheless yields a textile material in which the pesticide activity is maintained even after multiple washes. Furthermore, it was an object of the invention to provide formulations suitable for use in said impregnation process.

Surprisingly, it has been found that the problem can be solved using polymeric binders which comprise ethylene and unsaturated carboxylic acids as monomers.

In a first embodiment, the present invention relates to a process for manufacturing pesticide treated fabric and/or netting materials by impregnating said nettings with a formulation comprising at least pesticides and polymeric binders and drying, wherein the formulation comprises at least
(A) a pesticide,
(B) a polymeric binder dispersed in the aqueous formulation with an average molecular mass Mₙ of 1500 to 20000 g/mol, composed of the following monomers
   (B1) from 60 to 95 % by weight of ethylene,
   (B2) from 5 to 40 % by weight of at least one unsaturated carboxylic acid, selected from the group of
      (B2a) monoethylenically unsaturated C₃-C₁₀ monocarboxylic acids,
         and
      (B2b) monoethylenically unsaturated C₄-C₁₀ dicarboxylic acids,
         and
   (B3) optionally from 0 to 30 % by weight of other ethylenically unsaturated monomers which are copolymerizable with (B1) and (B2),
   the amounts of monomers being based in each case on the total amount of all monomers employed, and
(C) water or an aqueous solvent mixture comprising at least 65 % by weight of water,
and wherein the impregnation is done at temperatures from 15 to 50 °C.

Also described herein is the use of such impregnated materials, in particular such impregnated textile materials, the protection of human, animals and materials from harmful organisms.

The following details are relevant to the invention:

### Formulation

The formulation described herein comprises at least a pesticide (A), a polymeric binder (B), a solvent component (C) and optionally further components (D).

### Pesticide (A)

The term "pesticide" as used herein comprises any kind of active ingredients suitable for combating harmful organisms, in particular insecticides, repellents, fungicides, molluscicide, and rodenticides.

The term "insecticides" as used herein comprises agents with arthropodicidal (specifically, insecticidal, acaricidal and miticidal) activity, if not otherwise stated in the context.

The term "fungicides" as used herein comprises agents with fungicidal, microbicidal and viricidal activity, if not otherwise stated in the context.

Preferably, the insecticide and/or repellent has a fast paralyzing or killing effect on the insect and low mammalian toxicity. Suitable insecticides and/or repellents are known to a person skilled in the art. Suitable insecticides and repellents are disclosed in E.C. Tomlin et al., The Pesticide Manual, 13ed., The British Crop Protection Council, Farn-ham 2003, and the literature cited therein.

Preferred insecticides and/or repellents for carrying out the present invention include those disclosed in WO 2005/64072, page 11, line 28 to page 14, line 34.

Further examples of insecticides include N-arylhydrazine derivatives as disclosed in WO 2006/128870, page 12, line 1 to page 18, line 37, nicotinic acetylcholine receptor agonists such as acetamiprid, clothianidin, dinotefuran, imidacloprid, nitenpyram, thiacloprid, thiamethoxam, nicotine, bensultap, thiocyclam, spinosyns, chlorine channel activators such as: abamectin, emamectin benzoate, milbemectin; juvenile hormone mimics such as: hydroprene, kinoprene, methoprene, fenoxycarb, pyriproxyfen; selective feeding blockers such as: cryolite, pymetrozine, flonicamid; mite growth inhibitors such as: clofentezine, hexythiazox, etoxazole; microbial insecticides such as: Bacillus thuringiensis, B. t. aizawai, B.t. kurstaki, B.t. tenebrionis, B. sphaericus; inhibitors of oxidative phosphorilation, disruptors of ATP formation such as: diafenthiuron, azocyclotin, cyhexatin, fenbutatin oxide, propargite, tetradifon; uncouplers of oxidative phosphorilation such as: chlorfenapyr, DNOC; inhibitors of chitin biosynthesis such as: chlorfluazuron, fluazuron, diflubenzuron, flufenoxuron, hexaflumuron, novaluron, noviflumuron, teflubenzuron, triflumuron, buprofezin; ecdysone agonists and molting disruptors such as: cyromazine, azadirachtin, chromafenozide, halofenozide, methoxyfenozide, tebufenazide; octopamineergic agonists such as: amitraz, coupling site II electron transport inhibitors such as: hydramethylnon, acequinocyl, fluacrypyrim; coupling site I electron transport inhibitors such as: fenazaquin, fenpyroximate, pyrimidifen, pyridaben, tebufenpyrad, tolfenpyrad, rotenone; voltage dependent sodium channel blockers such as: indoxacarb; inhibitors of lipid synthesis such as: spirodiclofen, spiromesifen; mitochondrial complex IV electron transport inhibitors such as: phosphides, cyanide, phosphine; neuronal inhibitors such as: bifenazate; aconitase inhibitors such as: fluoroacetyate, synergists such as: pieronyl butoxide, DEF; ryanodine receptor modulator such as: flubendiamide; compounds with unknown mode of action such as: benzoximate, chinomethionat, dicofol, pyridalyl, or miscellaneous non specific inhibitors such as: borax, tartar emetic.

A suitable molluscicide is for example niclosamide.

Examples of suitable rodenticides comprise those disclosed in WO 2005/64072, page 18, lines 9 to 14.

Examples of suitable fungicides comprise those disclosed in WO 2005/64072, page 15, line 13 to page 16, line 4.

Suitable pesticides may be selected by the skilled artisan depending in the intended use of the formulation or more specifically the intended use of the non-living material to be treated with the formulation. Only one pesticide may be used, but it is of course possible to use a mixture of two or more different pesticides.

Preferred insecticides and/or repellents are selected from the group of synthetic pyrethroids such as alphacypermethrin, cyfluthrin, deltamethrin, ethofenprox and permethrin, other pyrothreids such as bifenthrine and non-pyrethroids such as carbosulphanes. If insecticides and repellents are chiral substances, they may be applied as racemates, pure enantiomers or diastereomers or in chirally enriched mixtures. Most preferred is alphacypermethrin.

### Polymeric binder (B)

The aqueous formulation furthermore comprises at least one polymeric binder (B) dispersed or emulgated in the formulation which comprises at least ethylene (B1) and an unsaturated carboxylic (B2) acid as monomers.

The polymeric binder (B) has an average molecular mass Mₙ in the range from 1500 to 20 000 g/mol, preferably 2000 to 15 000 g/mol, determinable for example by gel permeation chromatography (GPC).

As monomer (B1) the polymeric binder comprises from 60 to 95 % by weight of ethylene. Preferably, the amount of ethylene is from 70 to 80 % by weight. The amounts of monomers are being based in each case on the total amount of all monomers employed.

Furthermore, the polymeric binder (B) comprises at least one monoethylenically unsaturated carboxylic acid selected from the group of monoethylenically unsaturated C₃-C₁₀ monocarboxylic acids (B2a), and monoethylenically unsaturated C₄-C₁₀ dicarboxylic acids (B2b).

As monoethylenically unsaturated carboxylic acid (B2a) it is preferred to select at least one carboxylic acid of the general formula I 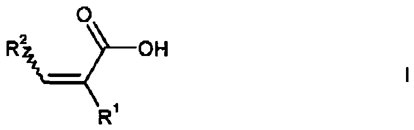 in which the variables are defined as follows:
- R¹ and R²: are alike or different.
- R¹: is selected from hydrogen and unbranched and branched C₁-C₁₀ alkyl, such as methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl; more preferably C₁-C₄ alkyl such as methyl, ethyl, n-propyl, isopropyl, n-butyl, isobutyl, sec-butyl, and tert-butyl; and especially methyl;
- R²: is selected from unbranched and branched C₁-C₁₀ alkyl, such as methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl; more preferably C₁-C₄ alkyl such as methyl, ethyl, n-propyl, isopropyl, n-butyl, isobutyl, sec-butyl, and tert-butyl; and especially methyl; and with very particular preference hydrogen.
- R¹: may be hydrogen or methyl. With very particular preference R¹ is methyl.
- R¹: may be hydrogen or methyl and R² may be hydrogen.

With very particular preference the ethylenically unsaturated carboxylic acid used of the general formula I is methacrylic acid.

Monomer (B2b) is at least one monoethylenically unsaturated dicarboxylic acid of the general formula (HOOC)R³C=CR⁴(COOH) (I) and/or R³R⁴C=C(-(CH₂)ₙ-COOH)(COOH) (II).

It is also possible to use mixtures of two or more different monomers (B2b). In the case of (I) the monomer in question may in each case be the cis form and/or the trans form. The monomers can also be used in the form of the corresponding carboxylic anhydrides or other hydrolyzable carboxylic acid derivatives. Where the COOH groups are located in cis form it is possible with particular advantage to use cyclic anhydrides.

R³ and R⁴ independently of one another are H or a straight-chain or branched, optionally substituted alkyl radical having 1 to 20 carbon atoms. Preferably the alkyl radical has 1 to 4 carbon atoms. More preferably R³ and/or R⁴ are/is H and/or a methyl group. The alkyl radical may also optionally contain further substituents, provided they have no adverse effect on the performance properties of the polymer or of the process.

In the case of the formula (I) a further possibility is for R³ and R⁴ together to be an alkylene radical having 3 to 20 carbon atoms which may also optionally be substituted further. Preferably the ring formed from the double bond and the alkylene radical comprises 5 or 6 carbon atoms. Examples of alkylene radicals comprise in particular a 1,3-propylene or a 1,4-butylene radical, which may also contain further alkyl group substituents. n is an integer from 0 to 5, preferably 0 to 3 and very preferably 0 or 1.

Examples of suitable monomers (B2b) of the formula (I) comprise maleic acid, fumaric acid, methylfumaric acid, methylmaleic acid, dimethylmaleic acid and also if appropriate the corresponding cyclic anhydrides. Examples of formula (II) comprise methylenemalonic acid and itaconic acid. Preference is given to using monomers of the formula (I), particular preference being given to maleic acid and/or maleic anhydride.

The amount of all unsaturated carboxylic acids (B2) together is from 4 to 40 % by weight, preferably from 20 to 30 % by weight.

Besides the monomers (B1) and (B2) it is optionally possible to use one or more ethylenically unsaturated monomers (B3) copolymerizable with (B1) and (B2). Other than these no further monomers are used.

The monomers (B3) serve to fine-tune the properties of the copolymer. Of course two or more different monomers (B3) can also be used. They are selected by the skilled worker in accordance with the desired properties of the copolymer.

Examples of monomers (B3) comprise olefins, in particular α-olefines like propylene, 1-butene, 1-hexene, 1-octene, 1-decene, or 1-dodecene, styrene or other olefins like 2-butene or isobutene, furthermore one or more C₁-C₁₀ alkyl esters or ω-hydroxy-C₂-C₁₀ alkylene esters of an ethylenically unsaturated C₃-C₁₀ carboxylic acid, such as methyl acrylate, ethyl acrylate, methyl methacrylate, ethyl methacrylate, n-butyl acrylate, 2-hydroxyethyl (meth)acrylate, 2-ethylhexyl (meth)acrylate or n-butyl methacrylate, for example. Further examples include monoethylenically unsaturated monomers comprising P-groups, such as vinylphophonic acid.

The amount of additional monomers (B3) is from 0 to 30 % by weight, preferably from 0 to 9 % by weight and very preferably from 0 to 4 % by weight. Very preferably, there are no monomers (B3) present.

In general, the polymeric binder (B) has a melt flow rate (MFR) in the range from 1 to 150 g/10 min, preferably 5 to 20 g/10 min, more preferably 7 to 13 g/10 min, measured at 160°C under a load of 325 g in accordance with EN ISO 1133.

In general, the polymeric binder (B) may have an acid number in the range from 30 to 190 mg KOH/g wax, preferably 155 to 180 mg KOH/g wax, determined in accordance with DIN EN 2114.

In general, the melting range of polymeric binder (B) is in the range from 60 to 110°C, preferably in the range from 65 to 90°C, determined by DSC in accordance with DIN 51007.

In general, the density of the polymeric binder (B) is in the range from 0.89 to 0,99 g/cm³, preferably 0.89 to 0.96 g/cm³, determined in accordance with DIN 53479.

Inventively used polymeric binders (B) of ethylene (B1), ethylenically unsaturated carboxylic acids (B2) and optionally further comonomers (B3) may be prepared advantageously by free-radically initiated copolymerization under high-pressure conditions, such as in stirred high-pressure autoclaves or in high-pressure tube reactors, for example, and preferably in combinations of stirred high-pressure autoclaves and high-pressure tube reactors. Stirred high-pressure autoclaves are known per se: a description is found in Ullmann's Encyclopedia of Industrial Chemistry, 5th edition, entry heading: Waxes, Vol. A 28, pp. 146 ff., Verlag Chemie Weinheim, Basle, Cambridge, New York, Tokyo, 1996. The length/diameter ratio in such autoclaves is predominantly in ranges from 5:1 to 30:1, preferably 10:1 1 to 20:1. The high-pressure tube reactors which it is equally possible to employ are likewise found in Ullmann's Encyclopedia of Industrial Chemistry, 5th edition, entry heading: Waxes, Vol. A 28, pp. 146 ff., Verlag Chemie Weinheim, Basle, Cambridge, New York, Tokyo, 1996.

Suitable pressure conditions for the copolymerization are 500 to 4000 bar, preferably 1500 to 2500 bar. Conditions of this kind are also referred to below as high pressure.

The reaction temperatures are in the range from 170 to 300°C, preferably in the range from 195 to 280°C.

The copolymerization can be carried out in the presence of a regulator. Suitable regulators are known to the skilled artisan. Examples have been disclosed in WO 2007/009909, page 8, line 18 to page 9, line 4.

Initiators which can be used for the free-radical polymerization are the typical free-radical initiators such as organic peroxides, oxygen or azo compounds, for example. Mixtures of two or more free-radical initiators are suitable as well. Examples have been disclosed in WO 2007/009909, page 9, line 10 to page 10, line 16.

Comonomers (B1), (B2), and optionally (B3) are typically metered together or separately. Comonomers (B1), (B2), and optionally (B3) can be compressed in a compressor to the polymerization pressure. In another embodiment of the method of the invention the comonomers are first brought by means of a pump to an increased pressure of, for example, 150 to 400 bar, preferably 200 to 300 bar, and in particular 260 bar, and then brought with a compressor to the actual polymerization pressure.

The proportion of the comonomers (B1), (B2), and optionally (B3) in the case of metered addition typically does not correspond exactly to the proportion of the units in the polymeric binder (B) since ethylenically unsaturated carboxylic acids are generally incorporated more readily into the polymeric binder (B) than is ethylene.

The copolymerization may optionally be carried out in the absence and in the presence of solvents. Examples of suitable solvents include toluene, isododecane, and isomers of xylene.

The polymeric binder (B) is used in form of its aqueous dispersion. Preferably, an aqueous dispersion of the binder (B) is prepared in a separate step and such aqueous dispersion is used for manufacturing the formulation described herein. However, it is also possible to isolate the binder (B) as a solid after the polymerization process and to use as a solid for the pesticide formulation.

The polymeric binder (B) used as described herein may be at least partly neutralized, for example with hydroxide and/or carbonate and/or bicarbonate of alkali metal, for example, sodium hydroxide, potassium hydroxide, sodium carbonate, potassium carbonate, sodium bicarbonate, potassium bicarbonate, lithium hydroxide, or preferably with one or more amines, such as, for example, ammonia and organic amines, such as, for example, alkylamines, N-alkylethanolamines, alkanolamines and polyamines. The following may be mentioned by way of example for alkylamines: triethylamine, diethylamine, ethylamine, trimethylamine, dimethylamine, methylamine, piperidine and morpholine. Preferred amines are monoalkanolamines, N,N-dialkylalkanolamines, N-alkylalkanolamines, dialkanolamines, N-alkylalkanolamines and trialkanolamines having in each case 2 to 18 carbon atoms in the hydroxyalkyl radical and, if appropriate, in each case, 1 to 6 carbon atoms in the alkyl radical, preferably 2 to 6 carbon atoms in the alkanol radical and, if appropriate, 1 or 2 carbon atoms in the alkyl radical. Ethanolamine, diethanolamine, triethanolamine, methyldiethanolamine, n-butyldiethanolamine, N,N-dimethylethanolamine and 2-amino-2-methylpropan-1-ol are very particularly preferred. Ammonia and N,N-dimethylethanolamine are very particularly preferred. The following may be mentioned by way of example as polyamines: ethylenediamine, tetramethylethylenediamine (TMEDA), diethylenetriamine and triethylenetetramine.

Preferably, the polymeric binder (B) is partly neutralized, i.e. at least one third, more preferably at least 60 mol-%, of the carboxyl groups and, for example, up to 99 mol-% of the carboxyl groups of the binder (B) are neutralized.

Furthermore, it is possible to use at least one surfactant as an auxiliary for the dispersion or emulsion of binder (B) in water. In particular, the surfactant may be anionic or preferably non-ionic.

Examples of anionic surfactants comprise alkali- or ammonium salts of C₈ to C₁₂.

In particular preferred are non-ionic surfactants including but not limited to alkoxylated C₁₀-C₃₀-alkanoles, preferably comprising from 3 to 100 moles C₂-C₄-alkylene oxides, and in particular alkoxylates oxo- or fatty alcohols. Examples of very preferred alkoxylates comprise

n-C₁₈H₃₇O-(CH₂CH₂O)₈₀-H,

n-C₁₈H₃₇O-(CH₂CH₂O)₇₀-H,

n-C₁₈H₃₇O-(CH₂CH₂O)₆₀-H,

n-C₁₈H₃₇O-(CH₂CH₂O)₅₀-H,

n-C₁₈H₃₇O-(CH₂CH₂O)₂₅-H,

n-C₁₈H₃₇O-(CH₂CH₂O)₁₂-H,

n-C₁₆H₃₃O-(CH₂CH₂O)₈₀-H,

n-C₁₆H₃₃O-(CH₂CH₂O)₇₀-H,

n-C₁₆H₃₃O-(CH₂CH₂O)₆₀-H,

n-C₁₆H₃₃O-(CH₂CH₂O)₅₀-H,

n-C₁₆H₃₃O-(CH₂CH₂O)₂₅-H,

n-C₁₆H₃₃O-(CH₂CH₂O)₁₂-H,

n-C₁₃H₂₇O-(CH₂CH₂O)₇₀-H,

n-C₁₃H₂₇O-(CH₂CH₂O)₆₀-H,

n-C₁₃H₂₇O-(CH₂CH₂O)₅₀-H,

n-C₁₃H₂₇O-(CH₂CH₂O)₂₅-H,

n-C₁₃H₂₇O-(CH₂CH₂O)₁₂-H,

n-C₁₂H₂₅O-(CH₂CH₂O)₁₁-H,

n-C₁₂H₂₅O-(CH₂CH₂O)₁₈-H,

n-C₁₂H₂₅O-(CH₂CH₂O)₂₅-H,

n-C₁₂H₂₅O-(CH₂CH₂O)₅₀-H,

n-C₁₂H₂₅O-(CH₂CH₂O)₈₀-H,

n-C₃₀H₆₁O-(CH₂CH₂O)₈-H,

n-C₁₀H₂₁O-(CH₂CH₂O)₉-H,

n-C₁₀H₂₁O-(CH₂CH₂O)₇-H

n-C₁₀H₂₁O-(CH₂CH₂O)₅-H,

n-C₁₀H₂₁O-(CH₂CH₂O)₃-H,

including any mixtures thereof, wherein the indices should be understood in usual manner as average number.

Dispersions of the polymeric binder (B) may be made, by mixing the binder (B), water and optionally surfactants and/or bases at temperatures of at least 70°C.

### Solvent component (C)

Preferably only water is used as solvent for the formulation. However, minor amounts (e.g. less than 50 % by weight) of organic solvents miscible with water may be used in addition. Such additional solvents may be useful to improve wetting of the surfaces to be treated or to improve the solubility / dispersibility of a hydrophobic pesticide or other components in the formulation. Examples of additional solvents comprise water-miscible alcohols, e.g. monoalcohols such as methanol, ethanol or propanol, higher alcohols such as ethylene glycol or polyether polyols and ether alcohols such as butyl glycol or methoxypropanol. If an aqueous mixture is employed the mixture preferably comprises at least 65%, more preferably at least 80% and very preferably at least 95% by weight of water. The figures are based in each case on the total amount of all solvents.

### Additional components (D)

Depending on the intended use of the non-living material to be treated the formulation according to the present invention may further comprise one or more components selected from preservatives, detergents, fillers, impact modifiers, anti-fogging agents, blowing agents, clarifiers, nucleating agents, coupling agents, conductivity-enhancing agents (antistats), stabilizers such as anti-oxidants, carbon and oxygen radical scavengers and peroxide decomposing agents and the like, flame retardants, mould release agents, agents having UV protecting properties, spreading agents, anti-blocking agents, anti-migrating agents, foam-forming agents, anti-soiling agents, thickeners, further biocides, wetting agents, plasticizers and film-forming agents, adhesive or anti-adhesive agents, optical brightening (fluorescent whitening) agents, pigments and dyestuffs.

In a preferred embodiment, the formulation described herein furthermore comprises at least one pigment and/or at least one dyestuff.

Surfactants may be used for stabilizing the pesticide (A) and/or the polymeric binder (B) in the formulation. In particular preferred are anionic and/or non-ionic surfactants. Typical examples have already been mentioned above.

Suitable anti-foam agents are for example silicon anti-foam agents. Suitable UV-protecting agents for protecting UV-sensitive pesticides are for example para-aminobenzoic acids (PABA), octylmethoxysinameth, stilbenes, styryl or benzotriazole derivatives, benzoxazol derivatives, hydroxy-substituted benzophenones, salicylates, substituted triazines, cinnamic acid derivatives (optionally substituted by 2-cyano groups), pyrazoline derivatives, 1,1'-biphenyl-4,4'-bis-2-(methoxyphenyl)-ethenyl or other UV protecting agents. Suitable optical brighteners are dihydroquinolinone derivatives, 1,3-diaryl pyrazoline derivatives, pyrenes, naphthalic acid imides, 4,4'- diystyryl biphenylene, 4,4'- diamino-2,2'-stilbene disulphonic acids, cumarin derivatives and benzoxazole, benzisoxazole or benzimidazole systems which are linked by -CH=CH-bridges or other fluorescent whitening agents.

Typical pigments which may be used in the formulation described herein are pigments which are used in pigment dyeing or printing processes or are applied for the coloration of plastics.

Pigments may be inorganic or organic by their chemical nature. Inorganic pigments are mainly used as white pigments (e.g., titanium dioxide in the form of rutile or anatas, ZnO, chalk) or black pigments (e.g., carbon black). Colored inorganic pigments may be used as well but are not preferred because of potential toxicologic hazards. For imparting color, organic pigments or dyestuffs are preferred. Organic pigments may be mono or disazo, naphthol, benzimidazolone, (thio) indigoid, dioxazine, quinacridone, phthalocyanine, isoindolinone, perylene, perinone, metal complex or diketo pyrrolo pyrrole type pigments. Pigments may be used in powder or liquid form (i.e., as a dispersion). Preferred pigments are Pigment Yellow 83. Pigment Yellow 138, Pigment Orange 34, Pigment Red 170, Pigment Red 146. Pigment Violet 19, Pigment Violet 23, Pigment Blue 15/1, Pigment Blue 15/3, Pigment Green 7, Pigment Black 7. Other suitable pigments are known to a person skilled in the art.

Typical dyestuffs which may be used in the present invention are vat dyes, cationic dyes and disperse dyes in powder or liquid form. Using the vat pigment form is preferred. Vat dyes may be of the indanthrone type, e.g. C.I. Vat Blue 4, 6 or 14; or of the flavanthrone type, e.g. C.I. Vat Yellow 1; or of the pyranthrone type, e.g. C.I. Vat Orange 2 and 9; or of the isobenzanthrone (isoviolanthrone) type, e.g. C.I. Vat Violet 1; or of the dibenzanthrone (violanthrone) type, e.g. C.I. Vat Blue 16, 19, 20 and 22, C.I. Vat Green 1, 2 and 9. C.I. Vat Black 9; or of the anthraquinone carbazole type, e.g. C.I. Vat Orange 11 and 15, C.I. Vat Brown 1, 3 and 44, C.I. Vat Green 8 and C.I. Vat Black 27; or of the benzanthrone acridone type, e.g. C.I. Vat Green 3 and 13 and C.I. Vat Black 25; or of the anthraquinone oxazole type. e.g. C.I. Vat Red 10; or of the perylene tetra carbonic acid diimide type, e.g. C.I. Vat Red 23 and 32; or imidazole derivatives, e.g. C.I. Vat Yellow 46; or amino triazine derivatives, e.g. C.I. Vat Blue 66. Other suitable vat dyes are known to a person skilled in the art. Typical disperse and cationic dyestuffs are known to the person skilled in the art.

### Manufacture of the formulation

The formulation described herein may be formed by mixing all ingredients together with water and optionally further solvents using suitable mixing and/or dispersing aggregates. In general, the formulation is formed at a temperature of from 10 to 70 °C, preferably 15 to 50 °C, more preferably 20 to 40 °C.

It is possible to use solid pesticide (A), solid polymer (B) and optionally additional additives (D) and to disperse them in the solvent component (C)

However, it is preferred to use dispersions of the polymeric binder (B) in water as well as formulations of the pesticide (A) in water which have been separately prepared before. Such separate formulations may contain additional additives for stabilizing (A) and/or (B) in the respective formulations and are commercially available. In a second process step such raw formulations and optionally additional any additional solvents components (C) are added.

Also combinations are possible, i.e. using a pre-formed dispersion of (A) and/or (B) and mixing it with solid (A) and/or (B).

A dispersion of the polymeric binder (B) may be a pre-manufactured dispersion already made by a chemicals manufacturer.

However, it is also possible to use "hand-made" dispersions, i.e. dispersions made in small-scale by an end-user. Such dispersions may be made by providing a mixture of about 20 % of the binder (B) in water, adding a base such as ammonia, an amine or KOH, heating the mixture to temperature of 90 to 100°C and intensively stirring the mixture for several hours.

It is possible to manufacture the formulation as a final product so that it can be readily used by the end-user for the process according to the present invention.

However, it is of course also possible to manufacture a concentrate, which may be diluted by the end-user with additional solvent (D) to the desired concentration for use.

Furthermore, it may be possible to ship the formulation to the end-user as a kit comprising at least
- a first component comprising at least one pesticide (A); and
- a second component comprising at least one polymeric binder (B).

Further additives (D) may be a third separate component of the kit, or may be already mixed with components (A) and/or (B).

The end-user may prepare the formulation for use by just adding water to the components of the kit and mixing.

The components of the kit may be in form of a dry composition such as a powder, a capsule, a tablet, or an effervescent tablet. Suitable pesticides in dry form are available as effervescent tablets or wettable powders which can be easily dissolved to a homogeneous formulation by manual stirring or shaking.

The components of the kit may be formulations in water or aqueous solvent mixtures. Of course it is possible to combine an aqueous formulation of one of the components with a dry formulation of the other component(s).

In a preferred embodiment of the invention the kit comprises
- one formulation of the pesticide (A) and optionally solvent (C); and
- a second, separate formulation of at least one polymeric binder (B), a solvent component (C) and optionally components (D).

### Concentrations of the Components

The concentrations of the components (A), (B), (C) and optionally (D) will be selected by the skilled artisan depending of the technique to be used for impregnation.

In general, the amount of pesticide (A) may be up to 50 % by weight, preferably 20 to 50 % based on the amount of all components (A), (B) and (D) together, i.e. all components except the aqueous solvent (C).

The amount of polymeric binder (B) may be in the range of 40 to 90 % based on the amount of all components (A), (B) and (D) together.

If present, in general the amount of additional components (D) is from 0,1 to 40 %, preferably 0.5 % to 35 % based on the amount of (A), (B), and (C) together. If present, suitable amounts of pigments and/or dyestuffs are in general 0.01 to 20 % by weight, preferably 0.1 to 10 % by weight, more preferably 0.2 to 5 % by weight, based based (A), (B), and (D).

A typical formulation ready for use in impregnation processes comprises 0,01 to 2 %, preferably 0,1 to 1 % of components (A), (B), and optionally (D), the residual amount being the aqueous solvent (C).

A typical concentration of a concentrate to be diluted by the end-user may comprise 10 to 50 % of components (A), (B), and optionally (D), the residual amount being the aqueous solvent (C).

### Method of impregnation

The aim of the invention is to control a variety of pests, such as ticks, cockroaches, mites, fleas, lice, leeches, houseflies, mosquitoes, and other flying and crawling insects by treatment of non-living materials with pesticides and polymeric binders.

The polymeric binder binds the pesticides preferably to the surface of such non-living materials and ensures a long-term effect. Using the binder reduces the elimination of the pesticide out of the non-living materials due to environmental effects such as rain or due to human impact on the non-living material such as washing and/or cleaning it.

The non-living material may be any kind of non-living material. Examples include buildings, leather, synthetic adaptions of leather, flocked fabrics, sheets, foils and packaging material, wood, wall linings and coatings, carpets.

In context with the present invention, the non-living material is a fabric material or a netting. The fabric material or the netting may be made of a variety of natural and synthetic fibers, also as textile blends in woven or non-woven form, as knit goods or fibers. Natural fibers are for example cotton, wool, silk, jute or hemp. Synthetic fibers may be made of polyamides, polyesters, polyacrylonitriles, polyolefines, for example polypropylene or polyethylene, Teflon, and mixtures of fibers, for example mixtures of synthetic and natural fibers. Polyamides, polyolefins and polyesters are preferred as fiber material. Polyethylene terephthalate is especially preferred. Most preferred are nettings made from polyester, especially polyethylene terephthalate.

The fabric material may be in form of coverings, for example mattresses, pillows, duvets, cushions, curtains, wall coverings, wall linings and window and door screens. Further typical fabric materials are tents, mats, garments, such as socks, trousers, shirts, i.e. preferably garments used in body areas exposed to insecticide bites and the like. The nettings are for example used as bed nets for example mosquito nets, or for covering. Other applications are movable fences for the protection of humans and animals against air-borne low-flying insects. Fabrics or nettings may be used for wrapping sacks, containers of food and feed thus protecting the material from attack by insects but avoiding direct contact with the insecticide-treated nets or fabrics. Treated foils or tarpaulins can be used on all human premises which are permanently or temporarily inhabited such as refugee camps.

The present invention is particularly suitable for the impregnation of polyester nettings for use as mosquito nets.

The method of impregnation is not limited to a specific technology of treatment. Impregnation may be performed by dipping or submerging the non-living-material into the formulation or by spraying the formulation onto the surface of the non-living-material. After treating the treated non-living material may be dried simply at ambient temperatures.

The polymeric binder (B) used in the method according to the present invention does not require drying at higher temperatures, crosslinking or other aftertreatment steps, though it is of course within the scope of this invention to perform such additional steps. Even after drying at ambient temperatures, the binder (B) provides a sufficient binding of the pesticide to the surface of the non-living-material.

Accordingly, no sophisticated technology is necessary for impregnation, and therefore the impregnation process may be carried out by the end-user itself in at low-scale. For instance, a typical end-user may impregnate a mosquito-net itself, e.g. within its household, using the formulation according to the present invention. For this purpose, it is in particular advantageous to use the impregnation-kit according to the present invention.

The formulation of the present invention may be applied to fabric materials or nettings before their formation into the required products, i.e. while still a yarn or in sheet form, or after formation of the relevant products.

For the case of fabrics and/or nettings, in a preferred embodiment, the present invention relates to a process for impregnation of fabrics and/or netting materials at least comprising the following steps:
a) treating the fabric and/or netting with the aqueous formulation according to the present invention by any of the procedural steps selected from the group of
   (a1) passing the fabric material or netting through the formulation; or
   (a2) contacting the fabric material or netting with a roller that is partly or fully dipped into the formulation and drawing the formulation to the side of the netting of fabric material in contact with the roller, or
   (a3) submerging the material into the formulation; or
   (a4) spraying the formulation onto the fabric material or netting; or
   (a5) brushing the formulation onto or into the fabric material or netting; or
   (a6) applying the formulation as a foam; or
   (a7) coating the formulation onto fabric material or netting.
b) optionally removing surplus formulation by squeezing the material between rollers or by means of a doctor blade; and
c) drying the fabric material or netting.

In case the raw materials containing residues of preceding production processes, e.g. sizes, spin finishes, other auxiliaries and/or impurities, it may be beneficial to perform a washing step before the impregnation.

Specifically, the following details are important for the steps a), b), and c).

### Step a1)

The formulation is applied by passing the fabric or netting through the aqueous formulation. Said step is known by a person skilled in the art as padding. In a preferred embodiment the fabric or netting is completely submerged in the aqueous formulation either in a trough containing the liquor or the fabric or netting is passed through the formulation which is held between two horizontally oriented rollers. In accordance with the invention, the fabric material or netting may either be passed through the formulation or the formulation may be passed through the fabric or netting. The amount of uptake of the formulation will be influenced by the stability of concentrated baths, the need for level distribution, the density of fabric or netting and the wish to save energy costs for drying and curing steps. Usual liquor-uptakes may be 40 to 150 % on the weight of material. A person skilled in the art is familiar with determining the optimum value. Step a1) is preferred for impregnating open-width material which is later tailored into nets. For small-scale production or re-impregnating of non-treated nets, use of a simple hand-held roller may be sufficient.

### Step a2)

It is further possible to apply the aqueous formulation on the fabric material or netting by a roller that is partly dipped into the solution or emulsion or dispersion thus applying the solution or emulsion or dispersion to the side of the fabric material or netting in contact with the roller (kiss-rolling). By this method it is possible to impregnate only one side of the fabric material or netting which is advantageous if e.g. direct contact of the human skin with insecticide-treated material is to be avoided.

Impregnation of the fabric material or netting in step a1), a2) or a3) is typically carried out at temperatures from 10 to 70 °C, preferably 15 to 50 °C, more preferably 20 to 40 C.

### Step a4)

The spray may be applied in continuous processes or in batch-wise processes in suitable textile machines equipped with a spraying device, e.g. in open-pocket garment washer/extractors. Such equipment is especially suitable for impregnating ready-made nets.

### Step a6)

A foam comprises less water than the solution or emulsion mentioned above. The drying process may therefore be very short. The treatment may be performed by injecting gas or blends of gas (e.g., air) into it. The addition of surfactants, preferably with film-forming properties, may be required. Suitable surfactants and the required technical equipment are known to persons skilled in the art.

### Step a7)

A coating process may preferably carried out in a doctor-blade process. The process conditions are known to a person skilled in the art.

### Step b)

The surplus solution or emulsion is usually removed by squeezing the fabric or netting, preferably by passing the fabric material or netting through rollers as known in the art thus achieving a defined liquor uptake. The squeezed-off liquor may be re-used. Alternatively, the surplus aqueous solution or aqueous emulsion or aqueous dispersion may be removed by centrifuging or vacuum suction.

### Step c)

Drying may be performed at ambient temperatures. In particular, such a passive drying may be carried out in hot-dry climate. Of course, the drying process may be accelerated applying elevated temperatures. An active drying process would normally be performed during high scale processing. The drying is in general carried out temperatures below 200 °C. Preferred temperatures are from 50 to 170 °C, more preferably from 60 to 150 °C. The temperature choice is determined by the thermal stability of the insecticide in the formulation and the thermal stability of the non-living material impregnated.

For the method according to the invention aqueous formulation comprising at least one pigment and/or at least one dyestuff may be used so that the fabric material or netting is not only impregnated with the pesticide but in addition also coloured at the same time.

The process disclosed yields in an impregnated non-living-material. Therefore, in a further embodiment the present invention relates to an impregnated non-living material comprising at least one pesticide (A) and at least on polymeric binder (B).

Preferrably, the non-living-material is a netting or fabric material, and preferably the pesticide (A) is an insecticide and/or repellant. Preferred insecticides and/or repellents, polymerib binders (B) and preferred materials for the netting or fabric materials have already been mentioned.

A typical amount of insecticide and/or repellent in the impregnated netting or fabric is from 0.01 to 10 % (dry weight) of the (dry) weight of the fabric material or netting dependent on the insecticidal efficiency of the insecticide respectively the efficiency of the repellent. A preferred amount is between 0.05 and 5 % by weight of the fabric material or netting depending on the insecticide and/or repellent. For a pyrethroid like deltamethrin or alphacypermethrin, the preferred amounts are between 0.08 and 3.5 % of the weight of the fabric or netting. For a pyrethroid like permethrin or ethofenprox, the preferred amount is from 0.1 to 6 %.

A typical amount of the polymeric binder (B) is from 0.01 to 10 % by weight (dry weight) of the (dry) weight of the fabric or netting. As a general guideline, the weight ratio between insecticide and binder (B) should approximately be constant with a value depending on the insecticidal and migratory ability of the insecticide, i.e. the higher the amount the insecticide the higher also the amount of binder (B). Preferred amounts of binder (B) are from 0.1 to 5 % by weight, more preferably 0.2 to 3 % by weight of the (dry) weight of the fabric or netting.

Preferably, the impregnated fabric or netting comprises at least one pigment and/or at least one dyestuff. The amount of the at least one pigment and/or dyestuff is in general from 0.05 to 10 % by weight, preferably 0.1 to 5 % by weight, more preferably 0.2 to 3.5 % by weight of the (dry) weight of the fabric material or netting.

The impregnated fabric or netting materials may be used for various purposes.

In particular, such impregnated fabric or netting materials may be used for the protection men, animals and/or materials from harmful organisms. For instance, they may be used as mosquito-nets. Mosquito-nets impregnated according to the present invention may be washed several times without significant decrease in insect-controlling activity.

For the protection of materials from harmful organisms, they may wrapped around the material to be protected or the materials to be protected covered with it.

Examples of materials to be protected comprise crops and/or harvested crops such as e.g. tobacco, tobacco bales or other tobacco products which may be protected from harmful organisms during harvesting, drying, curing, transport and storage. The method according to the present invention avoids the necessity to treat such crops to be protected directly with pesticides or other chemicals.

Furthermore, the nets may be used for protecting animals in corrals and stables from insects and other pests.

### Examples

### Materials used

### Nettings

Commercial netting material made from PET (polyethylene terephthalate) fibers, complying with WHO-Roll Back Malaria "Specifications for netting materials" (Geneva, 2001) was used.

### Polymeric binder (B)

The polymer binders (B) were prepared according to the procedure disclosed in WO 2007/009909, pages 18 to 20.

The methacrylic acid content of the polymeric binders were determined by titration (acid number). The acid number of the polymeric binder was determined titrimetrically in accordance with DIN 53402. The consumption of KOH corresponds to the methacrylic acid content of the ethylene copolymer. The density was determined in accordance with DIN 53479. The melting range was determined by DSC (differential scanning calorimetry, differential thermoanalysis) in accordance with DIN 51007.

Two different polymeric binders were prepared:
Sample I: 73 weight % ethylene, 27 weight % methacrylic acid
Sample II: 92 weight % ethylene, 8 weight % methacrylic acid

### Dispersion A (basis: Sample I):

In a 2 liter autoclave with an anchored stirrer 21,28 parts per hundred of sample I, 3,57 parts per hundred of diethanolamine and 75,15 parts per hundred of demineralized water were mixed and heated to 98°C with stirring. After 3 hours at 98°, cooling was effected to room temperature to obtain a aqueous emulsion of sample I.

### Dispersion B (basis: Sample I):

In a 2 liter autoclave with an anchored stirrer 25 parts per hundred of sample I, 3,4 parts per hundred of ammonia (25%) and 71,6 parts per hundred of demineralized water were mixed and heated to 98°C with stirring. After 3 hours at 98°, cooling was effected to room temperature to obtain a aqueous emulsion of sample I.

### Dispersion C (basis: Sample II):

In a 2 liter autoclave with an anchored stirrer 20 parts per hundred of sample II, 49,75 parts per hundred of demineralized water, 0,05 parts sodiumdisulfite, 0,4 parts of KOH, 4,2 parts of a usual non-ionic surfactant (C₁₃-oxo alcohol ethoxylated with 2 ethylene oxide units) and 2,6 parts of another non-ionic surfactant (C₁₃-oxo alcohol ethoxylated with 10 ethylene oxide units) were mixed and heated to 140°C with stirring. After 30 min at 140°C, additional 25 parts of water were added and the mixture stirred for another hour at 140°. Finally, cooling was effected to room temperature to obtain a aqueous emulsion of sample II.

### Example 1:

### Dipping technique

### Formulation comprising a binder according to the invention

125 g netting made from 75-denier texturised polyester yarn having a fabric density of 29,4 g/m² was submerged in a 2-L beaker with 250 ml of dispersion A and additional water (comprising 6.25 g of binder (B)) and 1.77 g of a dispersion of alphacypermethrin in water (solids content ca. 10 g/l) and manually milled for 5 minutes in the treatment bath. The netting fully absorbs the treatment liquid. It was then removed from the beaker and allowed to dry at ambient temperature lying flat on a clean surface.
Theoretical concentration of active ingredient (alphacypermethrin): 40 mg/m² = 1.36 mg/g (found by GC analysis: 1.26 mg/g).

### Example 2:

### Padding technique

### Formulation comprising a binder according to the invention

Swatches of netting made from 75-denier texturised polyester yarn having a fabric density of 30,2 g/m² were impregnated by passing them through 300 mL of a treatment bath prepared of dispersion A and additional water (comprising 17.86 g of solid binder) and 5,18 g of a dispersion of alphacypermethrin in water (solids content ca. 10 g/l). The excess liquid was squeezed off by passing the swatches between rollers so that a wet pickup of 80 % (based on the weight of the fabric) was achieved. The impregnated swatches were dried at ambient temperature.

### Example 3:

### Padding technique

### Formulation comprising a binder according to the invention

The procedure of example 2 was used, however instead of dispersion B was used (comprising 15 g of solid binder).

### Example 4:

### Spraying application

### Formulation comprising a binder according to the invention

3 standard family size (160 x 180 x 150 cm) stitched nets, made from texturised 75 denier polyester yarn were loaded into a 50 pound Milnor end-loading washer/extractor. The treatment bath (dispersion A) was injected into the machine through an air-atomizing spray nozzle creating a mist. The treatment bath is absorbed by the nets while they rotate and tumble within the machine's cylinder. The cycle time of the treatment was typically 30 minutes. After the chemical application process was complete, the "wet" treated nets were transported from the washer/extractor to an industrial dryer and dried for 30 minutes at 80 °C.

### Comparative Example 1:

### Dipping technique

The procedure of example 2 was used, however instead of dispersion II a formulation comprising a conventional paraffin wax (comprising 1,98 g of paraffin wax) was used.

### Testing method

"Montpellier washing procedure" (as described in the annex World Health Organization PVC, 3/07/2002 "Evaluation of wash resistance of long-lasting insecticidal nets"): Net samples were washed individually in beakers containing 0.5 L deionised water and 2 g/L soap (pH 10-11) at 30 °C in a water bath shaken for 10 minutes at 155 movements per minute.

Since there are no industry norms for washing procedures mimicking hand washes, we adapted a standard laundry process by using the IEC detergent test formulation (which contains anionic, non-ionic detergents, zeolithes, inorganic builder but omitting the bleaching system) for 30 min at 60 °C in metal vessels which are moved (tumbled) and heated. This method imparts more severe conditions than the hand wash relative to temperature, emulsifying and dispersing effects but exerts probably less friction on the nets.

Testing procedure: Two bioassays were used with 4 replicate tests done on each piece: the 3 min bioassay in which there is forced contact of laboratory-reared Anopheles mosquitoes with treated netting for 3 min and 24-h holding period before scoring mortality (as "% mortality").

The long-established standard for ITN testing is with the use of WHO cones (WHOPES 96.1): clear plastic cone structures (1.1 cm diameter) with a flat flange around the bottom edge and a hole at the apex. The general procedure is to secure the cone to treated netting, flange side to the net, and introduce 5 mosquitoes into the cone and the hole plugged with cotton or a stopper. For inherent insecticidal activity, the insects are left in the cone resting on the netting for three minutes and then removed to a holding container supplied with sugar water. Mosquitoes from four cones are pooled to give 20 or more insects per holding container. Knockdown (KD) data can then be collected from the pooled mosquitoes at predetermined times out to 24-hours. For speed of knockdown, the mosquito can be left in the cone and the time to KD recorded for each individual mosquito until the 6^{th} of 11 insects (median) goes down. Each KD mosquito is removed as it goes down to prevent recounting that insect if it once again flies. All mosquitoes are then held as described previously for a 24-hour KD count.
All results are summarized in table 1.

**Table 1: Bioassay results**

| | No. Of washes | Bioassay result KD / DEAD |
|---|---|---|
| Example 1 | 0 | 100/100 |
| | 15 | 100/92 |
| | 20 | 100/90 |
| | | |
| Example 2 | 0 | 100/100 |
| | 15 | 100/92 |
| | 20 | 100/90 |
| | | |
| Example 3 | 0 | 100/88 |
| | 15 | 96/92 |
| | 20 | 98/94 |

## Claims

1. Process for manufacturing pesticide treated fabric and/or netting materials by impregnating said nettings with a formulation comprising at least pesticides and polymeric binders and drying, wherein the formulation comprises at least
(A) a pesticide,
(B) a polymeric binder dispersed in the aqueous formulation with an average molecular mass Mₙ of 1500 to 20000 g/mol, composed of the following monomers
(B1) from 60 to 95 % by weight of ethylene,
(B2) from 5 to 40 % by weight of at least one unsaturated carboxylic acid, selected from the group of
(B2a) monoethylenically unsaturated C₃-C₁₀ monocarboxylic acids,
and
(B2b) monoethylenically unsaturated C₄-C₁₀ dicarboxylic acids,
and
(B3) optionally from 0 to 30 % by weight of other ethylenically unsaturated monomers which are copolymerizable with (B1) and (B2),
the amounts of monomers being based in each case on the total amount of all monomers employed, and
water or an aqueous solvent mixture comprising at least 65 % by weight of water, and wherein the impregnation is done at temperatures from 15 to 50°C.

2. Process according to claim 1, wherein the impregnation is done at temperatures from 20 to 40°C.

3. Process according to claims 1 or 2, wherein the amount of (B1) is from 70 to 80 %, the amount of (B2) is from 20 to 30 % and the amount of (B3) is from 0 to 9 %.

4. Process according to any of claims 1 to 3, wherein the monomer (B2) is methacrylic acid.

5. Process according to any of claims 1 to 4, wherein the pesticide (A) is an insecticide and/or a repellent.

6. Process according to claim 5, wherein the insecticide is selected from the group of alphacypermethrin, cyfluthrin, deltamethrin, ethofenprox, permethrin, or bifenthrine.

7. Process according to any of claims 1 to 6, wherein a mixture of at least two different insecticides and/or a repellents is used.

8. Process according to any of claims 1 to 7 wherein the formulation comprises additionally auxiliary components (D), selected from the group of preservatives, detergents, fillers, impact modifiers, anti-fogging agents, blowing agents, clarifiers, nucleating agents, coupling agents, conductivity-enhancing agents, anti-oxidants, flame retardants, mould release agents, agents having UV protecting properties, spreading agents, anti-blocking agents, anti-migrating agents, foam-forming agents, anti-soiling agents, thickeners, biocides, wetting agents, plasticizers, film-forming agents, adhesive or anti-adhesive agents, optical brightening agents, pigments and dyestuffs.

9. Process according to any of claims 1 to 8, wherein the amount of (A) is from 20 to 50 % by weight and the amount of (B) is from 40 to 90 % by weight, based on the amount of (A), (B), and (D) together.

10. Process according to claim 9, wherein the amount of auxiliaries (D) is from 0,1 to 40 % by weight based on the amount of (A), (B), and (D) together.

11. Process according to any of claims 1 to 10 wherein the formulation comprises at least one surfactant, in an amount of 0.1 to 15 % by weight being on the total amount of all components of the formulation.

12. Process according to any of claims 1 to 11, wherein drying is performed at ambient temperatures

13. Process according to any of claims 1 to 12, comprising at least the following steps:
a) treating the fabric and/or netting with the aqueous formulation by any of the procedural steps selected from the group of
a1) passing the fabric material or netting through the formulation; or
a2) contacting the fabric material or netting with a roller that is partly or fully dipped into the formulation and drawing the formulation to the side of the netting of fabric material in contact with the roller, or
a3) submerging the material into the formulation; or
a4) spraying the formulation onto the fabric material or netting; or
a5) brushing the formulation onto or into the fabric material or netting; or
a6) applying the formulation as a foam; or
a7) coating the formulation onto fabric material or netting, and
b) optionally removing surplus formulation by squeezing the material between rollers or by means of a doctor blade; and
c) drying the fabric material or netting.

14. Process according to claim 13, wherein step a1) is carried out by completely submerging the fabric and/or netting material into the aqueous formulation either in a trough containing the aqueous formulation or passing the fabric and/or netting through the aqueous formulation which is held between two rollers.

15. Process according to any of claims 1 to 14, wherein the material to be treated is a netting material.

## Patentansprüche

1. Verfahren zur Herstellung von pestizidbehandelten textilen Flächenmaterialien und/oder Netzmaterialien durch Imprägnieren der Netze mit einer Formulierung, die mindestens Pestizide und polymere Bindemittel umfasst, und Trocknen, wobei die Formulierung mindestens
(A) ein Pestizid,
(B) ein in einer wässrigen Formulierung dispergiertes polymeres Bindemittel mit einer mittleren Molmasse Mₙ von 1500 bis 20.000 g/mol, das aus den folgenden Monomeren besteht:
(B1) 60 bis 95 Gew.-% Ethylen,
(B2) 5 bis 40 Gew.-% mindestens einer ungesättigten Carbonsäure aus der Gruppe bestehend aus
(B2a) monoethylenisch ungesättigten C₃-C₁₀-Monocarbonsäuren
und
(B2b) monoethylenisch ungesättigten C₄-C₁₀-Dicarbonsäuren
und
(B3) gegebenenfalls 0 bis 30 Ges.-% anderen ethylenisch ungesättigten Monomeren, die mit (B1) und (B2) copolymerisierbar sind,
wobei sich die Monomerenmengen jeweils auf die Gesamtmenge aller verwendeten Monomere beziehen, und
Wasser oder eine wässrige Lösungsmittelmischung mit mindestens 65 Gew.-% Wasser umfasst und wobei die Imprägnierung bei Temperaturen von 15 bis 50°C erfolgt.

2. Verfahren nach Anspruch 1, bei dem die Imprägnierung bei Temperaturen von 20 bis 40°C erfolgt.

3. Verfahren nach Anspruch 1 oder 2, bei dem die Menge von (B1) 70 bis 80%, die Menge von (B2) 20 bis 30% und die Menge von (B3) 0 bis 9% beträgt.

4. Verfahren nach einem der Ansprüche 1 bis 3, bei dem es sich bei dem Monomer (B2) um Methacrylsäure handelt.

5. Verfahren nach einem der Ansprüche 1 bis 4, bei dem es sich bei dem Pestizid (A) um ein Insektizid und/oder ein Repellent handelt.

6. Verfahren nach Anspruch 5, bei dem man das Insektizid aus der Gruppe bestehend aus Alphacypermethrin, Cyfluthrin, Deltamethrin, Ethofenprox, Permethrin oder Bifenthrin auswählt.

7. Verfahren nach einem der Ansprüche 1 bis 6, bei dem man eine Mischung von mindestens zwei verschiedenen Insektiziden und/oder Repellents verwendet.

8. Verfahren nach einem der Ansprüche 1 bis 7, bei dem die Formulierung zusätzlich Hilfskomponenten (D), die aus der Gruppe der Konservierungsmittel, Detergentien, Füllstoffe, Schlagzähigkeitsmodifikatoren, Antischleiermittel, Treibmittel, Klärmittel, Nukleierungsmittel, Kupplungsmittel, die Leitfähigkeit verbessernden Mittel, Antioxidantien, Flammschutzmittel, Formtrennmittel, Mittel mit UV-Schutzeigenschaften, Spreitmittel, Antiblockmittel, Antimigrationsmittel, Schaumbildungsmittel, Antiverschmutzungsmittel, Verdicker, Biozide, Netzmittel, Weichmacher, Filmbildner, Haftmittel oder Antihaftmittel, optischen Aufheller, Pigmente und Farbstoffe ausgewählt sind, umfasst.

9. Verfahren nach einem der Ansprüche 1 bis 8, bei dem die Menge von (A) 20 bis 50 Ges.-% und die Menge von (B) 40 bis 90 Gew.-%, bezogen auf die Menge von (A), (B) und (D) zusammen, beträgt.

10. Verfahren nach Anspruch 9, bei dem die Menge von Hilfsstoffen (D) 0,1 bis 40 Gew.-%, bezogen auf die Menge von (A), (B) und (D) zusammen, beträgt.

11. Verfahren nach einem der Ansprüche 1 bis 10, bei dem die Formulierung mindestens ein Tensid in einer Menge von 0,1 bis 15 Gew.-%, bezogen auf die Gesamtmenge aller Komponenten der Formulierung, umfasst.

12. Verfahren nach einem der Ansprüche 1 bis 11, bei dem man das Trocknen bei Umgebungstemperaturen durchführt.

13. Verfahren nach einem der Ansprüche 1 bis 12, das mindestens die folgenden Schritte umfasst:
a) Behandeln des textilen Flächengebildes und/oder Netzes mit der wässrigen Formulierung gemäß einem der Verfahrensschritte aus der Gruppe
a1) Führen des textilen Flächenmaterials oder Netzes durch die Formulierung; oder
a2) Inberührungbringen des textilen Flächenmaterials oder Netzes mit einer Walze, die teilweise oder vollständig in die Formulierung eingetaucht ist und Ziehen der Formulierung auf die mit der Walze in Berührung stehenden Seite des textilen Flächenmaterials oder Netzes, oder
a3) Untertauchen des Materials in der Formulierung; oder
a4) Aufsprühen der Formulierung auf das textile Flächenmaterial oder Netz; oder
a5) Streichen der Formulierung auf oder in das textile Flächenmaterial oder Netz; oder
a6) Aufbringen der Formulierung in Form eines Schaums; oder
a7) Beschichten des textilen Flächenmaterials oder Netzes mit der Formulierung; und
b) gegebenenfalls Entfernen von überschüssiger Formulierung durch Quetschen des Materials zwischen Walzen oder mit Hilfe einer Rakel; und
c) Trocknen des textilen Flächenmaterials oder Netzes.

14. Verfahren nach Anspruch 13, bei dem man Schritt a1) durchführt, indem man das textile Flächenmaterial und/oder Netzmaterial entweder in einer Wanne, die die wässrige Formulierung enthält, vollständig in der Formulierung untertaucht oder das textile Flächengebilde und/oder Netz durch die zwischen zwei Walzen gehaltene wässrige Formulierung führt.

15. Verfahren nach einem der Ansprüche 1 bis 14, bei dem es sich bei dem zu behandelnden Material um ein Netzmaterial handelt.

## Revendications

1. Procédé de fabrication de matériaux de filets et/ou textiles traités par des pesticides, par l'imprégnation desdits filets par une formulation comprenant au moins des pesticides et des liants polymères et un séchage, dans lequel la formulation comprend au moins
(A) un pesticide ;
(B) un liant polymère dispersé dans la formulation aqueuse ayant une masse moléculaire moyenne Mₙ allant de 1500 à 20 000 g/mol, composé des monomères suivants :
(B1) de 60 à 95% en poids d'éthylène ;
(B2) de 5 à 40% en poids d'au moins un acide carboxylique insaturé, choisi dans le groupe constitué par
(B2a) des acides C₃-C₁₀monocarboxyliques monoéthyléniquement insaturés, et
(B2b) des acides C₄-C₁₀dicarboxyliques monoéthyléniquement insaturés, et
(B3) éventuellement de 0 à 30% en poids d'autres monomères éthyléniquement insaturés qui sont copolymérisables avec (B1) et (B2) ;
les quantités de monomères étant basées dans chaque cas sur la quantité totale de tous les monomères employés, et
de l'eau ou un mélange de solvants aqueux comprenant au moins 65% en poids d'eau, et
dans lequel l'imprégnation est effectuée à des températures allant de 15 à 50 °C.

2. Procédé selon la revendication 1, dans lequel l'imprégnation est effectuée à des températures allant de 20 à 40°C.

3. Procédé selon les revendications 1 ou 2, dans lequel la quantité de (B1) va de 70 à 80%, la quantité de (B2) va de 20 à 30% et la quantité de (B3) va de 0 à 9%.

4. Procédé selon l'une quelconque des revendications 1 à 3, dans lequel le monomère (B2) est l'acide méthacrylique.

5. Procédé selon l'une quelconque des revendications 1 à 4, dans lequel le pesticide (A) est un insecticide et/ou un répulsif.

6. Procédé selon la revendication 5, dans lequel l'insecticide est choisi dans le groupe constitué par l'alpha-cyperméthrine, la cyfluthrine, la deltaméthrine, l'éthofenprox, la perméthrine ou la bifenthrine.

7. Procédé selon l'une quelconque des revendications 1 à 6, dans lequel un mélange d'au moins deux insecticides et/ou répulsifs différents est utilisé.

8. Procédé selon l'une quelconque des revendications 1 à 7, dans lequel la formulation comprend des composants auxiliaires supplémentaires (D), choisis dans le groupe constitué par les conservateurs, les détergents, les charges, les modificateurs d'impact, les agents antibuée, les agents gonflants, les clarificateurs, les agents de nucléation, les agents de couplage, les agents améliorant la conductivité, les antioxydants, les ignifuges, les agents de démoulage, les agents de protection contre les UV, les agents d'enduction, les agents anti-bloquants, les agents anti-migration, les agents moussants, les agents anti-salissures, les épaississants, les biocides, les agents mouillants, les plastifiants, les agents filmogènes, les agents adhésifs ou antiadhésifs, les azurants optiques, les pigments et les colorants.

9. Procédé selon l'une quelconque des revendications 1 à 8, dans lequel la quantité de (A) va de 20 à 50% en poids et la quantité de (B) va de 40 à 90% en poids, sur la base de la quantité de (A), (B) et (D) pris ensemble.

10. Procédé selon la revendication 9, dans lequel la quantité d'auxiliaires (D) va de 0,1 à 40% en poids, sur la base de la quantité de (A), (B) et (D) pris ensemble.

11. Procédé selon l'une quelconque des revendications 1 à 10, dans lequel la formulation comprend au moins un agent tensioactif, selon une quantité allant de 0,1 à 15% en poids sur la base de la quantité totale de tous les composants de la formulation.

12. Procédé selon l'une quelconque des revendications 1 à 11, dans lequel le séchage est effectué à des températures ambiantes.

13. Procédé selon l'une quelconque des revendications 1 à 12, comprenant au moins les étapes suivantes consistant à :
a) traiter le textile et/ou le filet par la formulation aqueuse par l'une quelconque des étapes de procédé choisies dans le groupe constitué par
a1) le passage du matériau textile ou du filet à travers la formulation aqueuse ; ou
a2) la mise en contact du matériau textile ou du filet avec un rouleau qui est partiellement ou totalement immergé dans la formulation et l'entraînement de la formulation sur le côté du filet ou du matériau textile en contact avec le rouleau ; ou
a3) l'immersion du matériau dans la formulation ; ou
a4) la pulvérisation de la formulation sur le matériau textile ou le filet ;
a5) l'enduction de la formulation sur ou dans le matériau textile ou le filet ; ou
a6) l'application de la formulation sous forme d'une mousse ; ou
a7) le revêtement de la formulation sur le matériau textile ou le filet ; et
b) éventuellement l'élimination de l'excès de formulation en exprimant le matériau entre des rouleaux ou au moyen d'une racle ; et
c) le séchage du matériau textile ou du filet.

14. Procédé selon la revendication 13, dans lequel l'étape a1) est effectuée par l'immersion totale du matériau textile et/ou de filet dans la formulation aqueuse soit dans un bac contenant la formulation aqueuse, soit par passage du textile et/ou du filet à travers la formulation aqueuse qui est maintenue entre deux rouleaux.

15. Procédé selon l'une quelconque des revendications 1 à 14, dans lequel le matériau à traiter est un matériau de filet.
